# FASCICULE DE BREVET EUROPEEN

(11) **EP 3 000 585 B1**
(45) Date de publication et mention de la délivrance du brevet: **09.01.2019**
(21) Numéro de dépôt: 15186280.2
(22) Date de dépôt: 22.09.2015
(51) Int. Cl.: B29C 65/78, B29C 65/48, B29D 22/02, B29C 53/02, B29C 57/00, B29C 67/00, B29K 21/00, B29L 22/02, F15B 1/10

(54) **PROCEDE ET APPAREIL D'ASSEMBLAGE DE PIECES DE VESSIE**
VERFAHREN UND GERÄT ZUM ZUSAMMENFÜGEN VON BLASENTEILEN
METHOD AND APPARATUS FOR ASSEMBLING BLADDER PARTS

(30) Priorité: 25.09.2014 FR 1459057
(43) Date de publication de la demande: 30.03.2016
(73) Titulaire: Société Auxiliare de Fabrication de la Sacatec, 15210 Ydes (FR)
(72) Inventeur: GUYOMARD, Jean-Paul, 19110 SAINT-JULIEN-PRES-BORT (FR)
(74) Mandataire: Santarelli

(56) Documents cités:
- JP-A- H10 156 949
- US-A- 529 142
- US-A- 1 557 680
- US-A- 1 592 809
- US-A- 1 637 465
- US-A- 2 698 273

## Description

La présente demande concerne un procédé et un appareil de réalisation d'une vessie.

Elle concerne plus particulièrement un procédé et un appareil d'assemblage d'une vessie composée d'au moins deux pièces.

Une telle vessie est par exemple destinée à être remplie de gaz, comme par exemple d'azote, et à être disposée dans un circuit fluidique, par exemple un circuit hydraulique, par exemple au sein d'un accumulateur.

Une vessie est souvent réalisée en deux parties, voire davantage, formées en un matériau souple de type élastomère. Deux parties sont alors assemblées par collage dans une zone périphérique biseautée, puis vulcanisées.

On connait par exemple les documents EP- 0 803 344 et JP H10 156949 dans lesquels sont décrits des procédés de réalisation d'une telle vessie, c'est-à-dire composée d'au moins deux pièces assemblées et collées l'une à l'autre selon une direction longitudinale de la vessie.

Traditionnellement, l'assemblage des pièces constitutives d'une vessie en vue de leur collage par vulcanisation est réalisé manuellement, par un ou des opérateurs, et consiste principalement à retourner une première pièce, comme une chaussette, par exemple une pièce inférieure de la vessie, et former un revers au bord de celle-ci pour qu'une bande périphérique biseautée et encollée se retrouve orientée vers l'extérieur, puis à positionner une bande périphérique biseautée et encollée d'une deuxième pièce, par exemple une pièce supérieure, sur la bande de la première pièce.

Ces opérations manuelles se traduisent pour l'opérateur par une fatigue des mains et des bras. Elles obligent aussi à effectuer une pression des pouces sur les pièces ce qui conduit, avec la répétition des gestes, à créer des problèmes de qualité.

Pour mettre en oeuvre un tel procédé d'assemblage, un opérateur doit aussi, à ces fins, suivre une formation longue et couteuse.

Par ailleurs, et surtout, un opérateur est généralement obligé de mettre ses doigts sur les plans de collage, ce qui peut engendrer une pollution et un risque de défauts d'assemblage de la vessie, comme par exemple un assemblage inhomogène et/ou une fluctuation d'un état de contrainte dans au moins l'une des pièces constitutives de la vessie.

En effet, lors de l'assemblage si un pli s'est malencontreusement formé, il est alors généralement préférable de décoller la pièce incriminée pour la replacer correctement, ce qui a en outre pour effet d'affaiblir la qualité du collage.

Par exemple, des défauts d'assemblage peuvent se traduire, lors de l'utilisation de la vessie, par des fuites de gaz au niveau des collages, ce qui pollue le circuit hydraulique et rend l'accumulateur inutilisable.

Enfin, un tel procédé d'assemblage étant manuel, il est difficilement reproductible du fait qu'il dépend de l'application et de la dextérité du ou des opérateurs impliqués, ce qui a une incidence sur une régularité, ou une constance, de qualité du produit.

On connait par ailleurs le document US 2 698 273 dans lequel est décrit un mandrin cylindrique muni d'un dispositif gonflable axisymétrique en vue d'appliquer une pression uniforme au niveau de la jonction de feuilles thermoplastiques.

Au moins un des objectifs de la présente demande est ainsi de résoudre, au moins en partie, les inconvénients précités, en menant en outre à d'autres avantages.

A cet effet, est proposé, selon un premier aspect de l'invention, un procédé d'assemblage d'une vessie formée d'au moins une première pièce et une deuxième pièce, la première pièce comportant une surface intérieure et une surface extérieure, et une bande périphérique de surface intérieure près d'un bord et qui est destinée à être encollée, et la deuxième pièce comportant une surface intérieure et une surface extérieure, et une bande périphérique de surface extérieure près d'un bord et qui est destinée à être encollée, qui comporte :
- Une étape d'enfilage de la première pièce autour d'un mandrin cylindrique ayant un bord libre, avec une partie de la surface extérieure de la première pièce orientée vers le mandrin et la bande périphérique de surface intérieure orientée vers l'extérieur ; cette étape d'enfilage comportant une sous-étape de positionnement de la bande de la première pièce au-dessus d'un dispositif gonflable axisymétrique annulaire positionné autour du mandrin ;
- Une étape de mise en place de la deuxième pièce avec la bande de la deuxième pièce orientée vers l'extérieur et au voisinage de la bande de la première pièce ;
- Une étape de gonflage du dispositif gonflable axisymétrique annulaire qui retourne la bande de la première pièce sur la bande de la deuxième pièce.

Autrement dit, le procédé comporte une étape de positionnement de deux pièces de la vessie à assembler l'une par rapport à l'autre, puis une étape de retournement d'au moins une bande encollée d'une des deux pièces grâce au dispositif gonflable axisymétrique annulaire.

Cette notion de dispositif gonflable axisymétrique annulaire peut désigner un simple tore, lorsqu'il est formé d'une seule cavité gonflable ; en variante, il peut être formé d'une pluralité circonférentielle de cavités, allongées ou au contraire au moins approximativement sphériques (on comprend que, pour obtenir l'effet de retournement de la périphérie d'une bande sur l'autre, il faut un nombre de cavités d'autant plus grand qu'elles ont une faible dimension circonférentielle ; en effet ces cavités sont en pratique approximativement jointives).

On comprend que l'effet de retournement est obtenu dès lors que la portion du dispositif qui est couverte par la bande périphérique de la première pièce s'incline, du fait du gonflage du dispositif, jusqu'à dépasser une position perpendiculaire à l'axe du mandrin.

Au moins l'une des pièces, par exemple la première, est alors retournée comme une chaussette, c'est-à-dire mise à l'envers, pour être enfilée sur le mandrin.

Avant le positionnement des pièces, il est en outre préférable que le procédé comporte une étape de contrôle d'un état dégonflé du dispositif gonflable axisymétrique annulaire.

Chacune des bandes peut être encollée à tout moment avant le retournement de l'une sur l'autre.

Afin de favoriser et améliorer le retournement de la bande de la première pièce, il est intéressant que le dispositif gonflable axisymétrique annulaire soit positionné en arrière d'une ligne (ou bande) d'attache par laquelle il est relié au mandrin et que la bande de la première pièce soit positionnée au-delà de cette ligne d'attache, sur le dispositif gonflable.

En d'autres termes, de manière avantageuse, la première bande est positionnée au-dessus du dispositif gonflable axisymétrique annulaire dans une configuration dégonflée où ce dispositif est fixé à la surface du mandrin en une zone qui est, par rapport à une zone médiane de ce dispositif gonflable perpendiculairement à l'axe du mandrin, décalée vers le bord libre du mandrin

Les termes « en arrière » et « au-delà » font ici référence à une position selon l'axe longitudinal du mandrin par rapport à un bord utile du mandrin du côté duquel est enfilée la première pièce. Le bord utile représente ainsi un avant du mandrin.

Selon un exemple de mise en oeuvre, l'étape de mise en place de la deuxième pièce comporte une étape d'enfilage de la deuxième pièce sur la première pièce autour du même mandrin, avec la bande de la première pièce qui dépasse du bord de la deuxième pièce près duquel se trouve la bande de la deuxième pièce, de sorte que la surface intérieure de la deuxième pièce est en contact avec la surface intérieure de la première pièce.

On entend ici que la surface intérieure de la deuxième pièce est en contact avec la surface intérieure de la première pièce qu'elles sont en contact sur au moins une partie et en vis-à-vis par ailleurs.

Par exemple, la deuxième pièce est positionnée autour du mandrin avec sa bande entre la ligne d'attache du dispositif gonflable et le bord utile du mandrin, et si possible avec son bord le plus près possible de la ligne d'attache.

Selon un autre exemple de mise en oeuvre, l'étape de mise en place de la deuxième pièce comporte une étape d'enfilage de la deuxième pièce sur un mandrin différent du mandrin sur lequel est enfilée la première pièce.

Par exemple, l'étape d'enfilage de la deuxième pièce sur le mandrin différent comporte :
- Une étape d'insertion de la deuxième pièce dans le mandrin différent ;
- Une étape de retournement d'un tronçon de la deuxième pièce comportant au moins la bande par-dessus un bord utile du mandrin ; et
- Une étape de formation d'un ourlet avec la bande de la deuxième pièce grâce à quoi la bande de la deuxième pièce est orientée vers l'extérieur.

Selon un exemple commode, le procédé comporte une étape de rapprochement du mandrin sur lequel est enfilée la première pièce et du mandrin sur lequel est enfilée la deuxième pièce avant l'étape de gonflage du dispositif gonflable.

Selon une option intéressante, le procédé comporte une étape de contrôle de positionnement d'au moins une des pièces avec un laser, préalablement à l'étape de gonflage.

Une fois assemblée, la vessie peut être par exemple vulcanisée.

Est également proposé, selon un deuxième aspect de l'invention, un appareil d'assemblage d'une vessie formée d'au moins une première pièce avec une bande périphérique de surface intérieure près d'un bord qui est destinée à être encollée et d'une deuxième pièce avec une bande périphérique de surface extérieure près d'un bord qui est destinée à être encollée, l'appareil comportant un mandrin cylindrique, une première zone de réception destinée à recevoir la bande périphérique de la première pièce et une seconde zone de réception destinée à recevoir la bande périphérique de la seconde pièce à proximité de la première zone de réception, cette première zone étant ménagée près d'un bord libre d'un mandrin cylindrique et cet appareil comportant en outre un dispositif gonflable axisymétrique annulaire positionné et fixé en périphérie du mandrin, et un système de gonflage du dispositif gonflable, ce dispositif gonflable et ce système de gonflage étant conçus en sorte de pouvoir retourner la bande périphérique de la première pièce sur la bande périphérique de la seconde pièce.

Un tel appareil permet ainsi d'assembler mécaniquement les pièces constitutives de vessie en minimisant les efforts à fournir de la part d'un opérateur, avec une étanchéité de la vessie qui en est améliorée.

Grâce à un tel appareil, les mouvements des opérateurs sont plus simples et moins fatigants.

Une vessie ainsi obtenue permet par exemple de résister à des pressions comprises entre environ 10 GPa et environ 100 GPa.

De manière générale, le dispositif gonflable est configuré pour s'épandre au-delà de sa ligne d'attache, au moins en direction du bord libre du mandrin.

Et par exemple, le dispositif est configuré pour s'épandre, selon l'axe longitudinal du mandrin, de manière dissymétrique en fonction de la pression interne qui lui est appliquée.

Ainsi, de manière préférée, le dispositif de gonflable axisymétrique annulaire est, dans sa configuration dégonflée, fixé à la surface du mandrin en une zone qui est, par rapport à une zone médiane de ce dispositif gonflable perpendiculairement à l'axe du mandrin, décalée vers le bord libre du mandrin.

On comprend aisément que cette zone de fixation peut être une simple ligne d'attache, circulaire, transversale à l'axe du mandrin. En variante, cette zone peut être constituée d'une bande d'attache ayant une dimension significative parallèlement à l'axe du mandrin, ou n'être constituée que d'une paire de lignes d'attaches circulaires et parallèles.

Indépendamment de l'emplacement de la fixation du dispositif gonflable axisymétrique annulaire, l'effet de retournement peut aussi être obtenu en raison d'un comportement anisotrope en déformation, se déformant, parallèlement à l'axe du mandrin, de manière plus importante vers le bord libre du mandrin qu'à l'opposé de celui-ci. Un tel comportement anisotrope peut notamment être obtenu en donnant à la paroi de la cavité (ou des cavités) de ce dispositif une épaisseur moindre, du côté du bord libre du mandrin, que l'épaisseur de cette paroi orientée à l'opposé de ce bord libre. En d'autres termes, il y a avantageusement une variation d'épaisseur ou de rigidité favorisant au gonflage le décalage du dispositif gonflable axisymétrique annulaire vers le côté utile du mandrin.

Il importe de noter que cette différence de comportement, du fait de la fixation du dispositif ou de la constitution de sa paroi déformable, entre le côté orienté vers le bord libre du mandrin et le côté opposé vise à favoriser au mieux, pour une énergie donnée, l'effet de retournement vers le bord libre du mandrin, mais qu'une telle différence peut être omise si on accepte de consommer de l'énergie pour déformer le dispositif de la même manière vers le bord libre que vers le côté opposé.

La zone de fixation du dispositif gonflable axisymétrique annulaire, étant perpendiculaire à l'axe du mandrin, est parallèle au bord libre de celui-ci sous réserve que ce bord soit dans un plan perpendiculaire à cet axe.

Le dispositif gonflable est par exemple réalisé en un matériau élastomère, par exemple en caoutchouc.

De manière avantageuse, le dispositif gonflable est formé en un matériau composite toilé, comportant par exemple des fils de trame et des fils de chaine.

Il comporte par exemple une paroi d'une épaisseur comprise entre environ 1 mm et environ 5 mm.

Le mandrin cylindrique, éventuellement creux, permet de positionner deux pièces constitutives de la vessie l'une par rapport à l'autre, et le retournement de l'une d'elles se fait automatiquement par le dispositif gonflable axisymétrique annulaire.

Selon un exemple, le mandrin est creux et ouvert à au moins une extrémité correspondant à une extrémité d'enfilage d'au moins une pièce de vessie à assembler.

Par exemple, le mandrin est rotatif autour d'un axe longitudinal du mandrin. Ceci facilite la mise en place de la pièce autour du mandrin.

Le mandrin comporte par exemple différents diamètres en fonction de la dimension de la vessie à assembler.

Selon un exemple particulier de réalisation, le mandrin précédemment décrit est un premier mandrin cylindrique et l'appareil comporte en outre un deuxième mandrin, cylindrique, aligné par rapport au premier mandrin.

De plus, selon un exemple particulièrement commode, l'appareil comporte alors un mécanisme de rapprochement du premier mandrin et du deuxième mandrin.

Par exemple, un diamètre du deuxième mandrin est égal à un diamètre du premier mandrin. Cela favorise une meilleure adhérence de la bande de la première pièce sur la bande de la deuxième pièce.

Par exemple, le deuxième mandrin est rotatif autour d'un axe longitudinal du deuxième mandrin. Ceci facilite alors la mise en place d'une pièce sur le deuxième mandrin.

En outre, selon une option intéressante pour vérifier plus facilement le positionnement des pièces de la vessie, et en particulier l'alignement des bandes, l'appareil comporte possiblement un laser de contrôle d'alignement d'une pièce sur un mandrin. Optionnellement, le laser est configuré pour émettre un faisceau orienté orthogonalement à un axe longitudinal du mandrin, ou d'au moins l'un des mandrins. Voire, l'appareil comporte un laser par mandrin, c'est-à-dire un premier laser pour le premier mandrin et un deuxième laser pour le deuxième mandrin.

Grâce à un procédé et à un appareil tel que décrits précédemment, les avantages principaux sont :
- De limiter les interventions manuelles des opérateurs ;
- D'évier un contact des doigts sur des films de collage et favoriser une tension homogène sur les assemblages ;
- De réduire le temps de formation des opérateurs, possiblement à quelques heures ;
- De rendre les appareils plus ergonomiques et plus simples d'utilisation ;
- De réduire un pourcentage de défauts pour raison de décollement ;
- D'améliorer la qualité des vessies fabriquées.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
les figures 1a et 1b montrent un exemple de vessie en deux pièces et un exemple de vessie en trois pièces, avec les pièces assemblées les unes aux autres par collage,
la figure 2 montre un exemple d'assemblage de deux pièces d'une vessie selon un exemple de mise en oeuvre d'un procédé selon l'art antérieur,
la figure 3, composée des figures 3a et 3b, illustre les principales étapes d'un procédé d'assemblage d'une vessie selon un mode de mise en oeuvre de la présente invention, et
la figure 4, composée des figures 4a et 4b, illustre les principales étapes d'un procédé d'assemblage d'une vessie selon un autre mode de mise en oeuvre de la présente invention.

Les figures représentent ici des exemples schématisés sur lesquels les échelles ne sont pas respectées pour mettre en évidence les différents mécanismes mis en jeu ; en outre, les déformations du dispositif gonflable y sont représentées de manière exagérée.

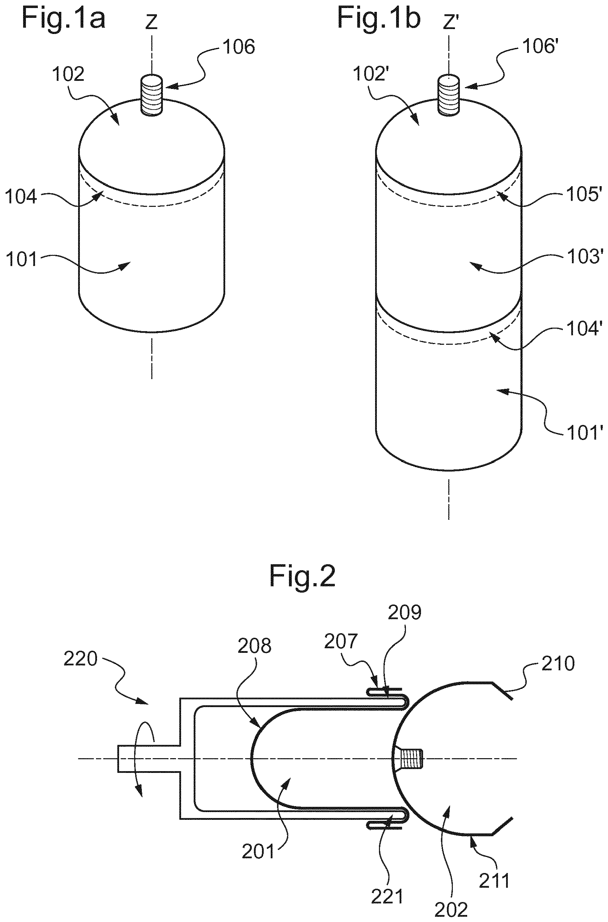

Les figures 1a et 1b présentent deux exemples de vessies généralement employées dans le domaine des accumulateurs hydrauliques.

De telles vessies sont généralement réalisées par une membrane, qui est par exemple en caoutchouc, ou possiblement en tout matériau élastomère.

Elles présentent souvent une forme sensiblement oblongue, allongée selon une direction longitudinale.

Une vessie, en particulier si elle présente de grandes dimensions, est souvent formée d'au moins deux pièces, généralement assemblées l'une à l'autre par collage selon une direction longitudinale de la vessie par commodité.

A titre d'exemples, la figure 1a montre une vessie en deux pièces, c'est-à-dire une pièce inférieure 101, qui forme ici la pièce la plus longue, et une pièce supérieure 102, qui forme ici la pièce la plus courte ; et la figure 1b montre une vessie en trois pièces avec, de même que précédemment une pièce inférieure 101' qui est la pièce la plus longue et une pièce supérieure 102' qui forme la pièce la plus courte, et une pièce intermédiaire 103' positionnée entre la pièce inférieure 101' et la pièce supérieure 102' qui a ici sensiblement la même longueur que la pièce inférieure 101'.

Les pièces inférieures 101, 101' et les pièces supérieures 102, 102' comportent en pratique au moins une partie sensiblement hémisphérique, ou arrondie, ou en forme de calotte. En outre, la partie supérieure 102, 102' comporte généralement une embouchure 106, 106' de raccordement à un réservoir de gaz (non représenté).

Dans chacun des cas, deux pièces consécutives (c'est-à-dire la pièce inférieure 101 et la pièce supérieure 102 dans l'exemple de la figure 1a, et la pièce inférieure 101' et la pièce intermédiaire 103' ainsi que la pièce intermédiaire 103' et la pièce supérieure 102' dans l'exemple de la figure 1b) sont assemblées l'une à l'autre par collage dans une zone de collage par recouvrement 104, 104', 105' selon une direction orthogonale à la direction longitudinale Z, Z' de la vessie.

Plus précisément, une bande périphérique d'une surface intérieure d'une des deux pièces à assembler recouvre une bande périphérique d'une surface extérieure de l'autre des deux pièces à assembler. Les bandes sont collées l'une à l'autres et forment ainsi une zone de collage par recouvrement 104, 104', 105'. Par commodité, une bande est située près d'un bord de la pièce considérée, voire est contigüe au bord.

Les termes « intérieur » et « extérieur » désignent ici les surfaces des pièces qui se retrouvent soit à l'intérieur soit à l'extérieur de la vessie une fois celle-ci réalisée ; l'intérieur de la vessie étant par exemple destiné à contenir un gaz une fois la vessie en service.

Pour éviter des créer une surépaisseur locale au niveau de la zone de collage par recouvrement 104, 104', 105', un tronçon de la pièce contigu au bord, comportant au moins la bande destinée à être encollée pour être collée, est par exemple biseauté ou aminci.

Comme le montre la figure 2, pour assembler deux pièces 201, 202 consécutives d'une vessie, un procédé traditionnel consiste par exemple à positionner une première pièce 201 qui comporte une bande 207 destinée à être encollée sur sa surface extérieure 208, par exemple la pièce la plus longue par commodité, dans un mandrin métallique creux 220, puis à retourner une partie 209 de la première pièce 201 par-delà un bord utile 221 du mandrin 220 et à replier la partie 209 retournée sur elle-même, par exemple en formant un ourlet, de sorte que la bande 207 de surface extérieure 208 destinée à être encollée soit orientée vers l'extérieur. Autrement dit, il s'agissait de former un rabat en S pour que la bande 207 destinée à être encollé se retrouve à l'extérieur.

Une deuxième pièce 202 qui comporte alors une bande 210 destinée à être encollée sur sa surface intérieure 211, par exemple la pièce la plus courte, est retournée, c'est-à-dire mise à l'envers, de sorte que la bande 210 destinée à être encollée qui est formée sur la surface intérieure 211 se retrouve alors à l'extérieur.

L'opérateur saisit la deuxième pièce 202 et l'approche de la première pièce 201 qui est montée sur le mandrin 220. Si nécessaire, la deuxième pièce 202 est par exemple insérée au moins en partie vers l'intérieur du mandrin 220, dans la première pièce 201. La bande 210 de la deuxième pièce 202 est alors sensiblement parallèle à la bande 207 de la première pièce 201. Puis l'opérateur rabat la bande 210 de la deuxième pièce 202 sur celle de la première pièce 201, par-dessus le bord utile 221 du mandrin 220.

L'opération d'assemblage le long de la bande 207 de la première pièce 201 est ainsi continuée en tournant le mandrin 220 au fur et à mesure.

Comme mentionné précédemment, un tel mode d'assemblage demande une dextérité de l'opérateur et des gestes précis (formation longue). L'opérateur est obligé de mettre les doigts sur la bande encollée (engendrant possiblement des risques de défauts ultérieurs). Et ceci demande un effort d'expansion de la deuxième pièce à cause du fait que les différentes pièces ont un même diamètre.

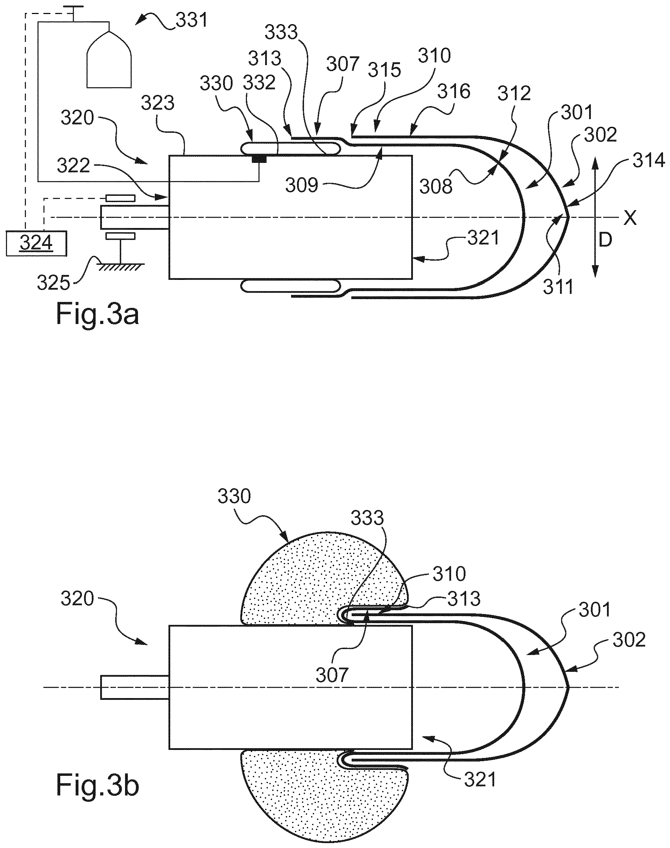

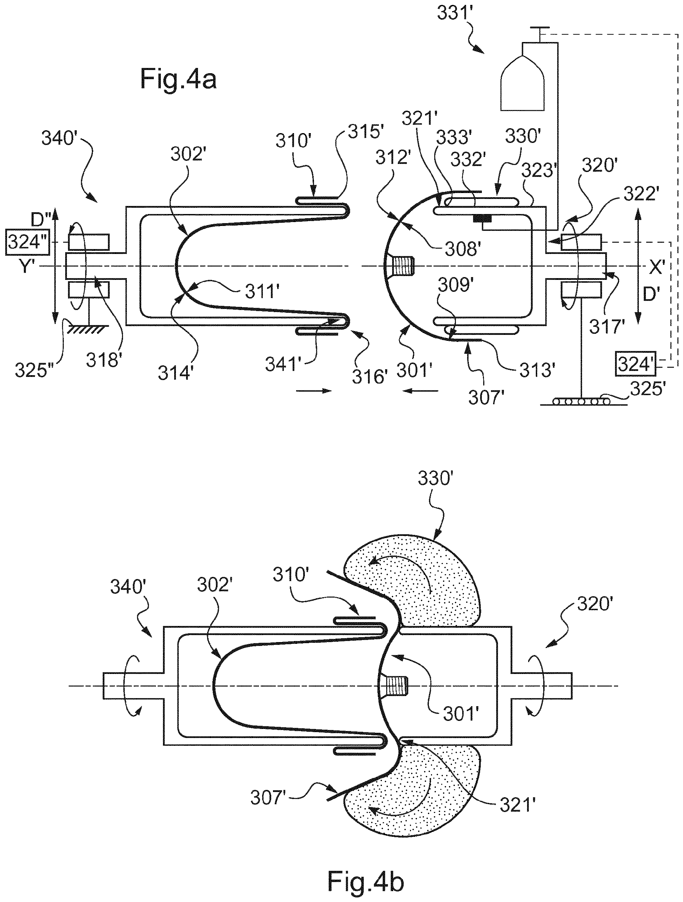

Les figures 3 et 4 illustrent des exemples de mise en oeuvre d'un procédé d'assemblage d'une vessie selon l'invention, au moyen d'éléments conçus à cet effet.

En référence à la figure 3, un appareil selon l'invention comporte au moins un mandrin 320 muni d'un dispositif gonflable 330.

Le mandrin 320 est typiquement un cylindre rigide, droit, d'axe longitudinal X et de diamètre D.

Il comporte un bord utile 321 du côté duquel sont montées des pièces 301, 302 de vessie, et un bord opposé 322 permettant par exemple de le relier à un socle 325 de l'appareil.

Par commodité, le mandrin 320 est rotatif autour de son axe longitudinal X, c'est-à-dire qu'il est configuré pour être pivoté autour de son axe X.

Ici, le mandrin est possiblement plein, mais il pourrait être creux (comme cela est par exemple schématisé figure 4), ce qui permettrait de pouvoir y introduire au moins une partie de pièce de vessie.

Le dispositif gonflable 330, monté sur le mandrin 320, a ici la forme d'un tore. Il est par exemple monté comme une bague autour du mandrin 320, c'est-à-dire sur une surface extérieure 323 du mandrin 320. Il est donc annulaire et, pour exprimer qu'il a des propriétés de gonflage similaires tout autour du mandrin, il est qualifié de « dispositif de gonflage axisymétrique annulaire ».

Le dispositif gonflable axisymétrique annulaire 330 est ici relié au mandrin par une surface d'attache 332, qui permet de définir une ligne d'attache 333 d'un côté du bord utile 321 du mandrin. Le dispositif gonflable axisymétrique annulaire, dans un état dégonflé, est ainsi positionné en arrière de la ligne d'attache 333 par rapport au bord utile 321. En outre, le dispositif gonflable axisymétrique annulaire 330 est possiblement collé sur la surface extérieure 323 du mandrin 320, par la surface d'attache 332, pour éviter qu'il ne se déplace lorsqu'il est gonflé pour retourner une bande d'une pièce 301.

Le dispositif gonflable axisymétrique annulaire 330 est en outre situé à une distance constante du bord utile 321 du mandrin 320 pour faciliter la réalisation des étapes du procédé d'assemblage des pièces à assembler, notamment si les deux pièces à assembler sont montées sur un même mandrin. Autrement dit, la ligne d'attache 333 est parallèle au bord utile 321 (lequel est perpendiculaire à l'axe du mandrin).

Plus précisément, dans l'exemple de la figure 3, le dispositif gonflable axisymétrique annulaire 330 est positionné à proximité du bord utile 321, à quelques centimètres, alors que, dans l'exemple de la figure 4, le dispositif gonflable axisymétrique annulaire est positionné sensiblement à raz du bord utile 321'.

Pour gonfler le dispositif gonflable axisymétrique annulaire, l'appareil comporte un système de gonflage 331 qui est relié au dispositif gonflable axisymétrique annulaire 330 de manière étanche.

Le système de gonflage 331 comporte par exemple un réseau d'air comprimé auquel est connecté un flexible, lui-même relié au dispositif gonflable axisymétrique annulaire de manière étanche.

En particulier lorsque le mandrin est creux, le système de gonflage 331 est possiblement relié au dispositif gonflable axisymétrique annulaire 330 par l'intérieur du mandrin, par un trou formé dans une paroi du mandrin par exemple, sous un emplacement du dispositif gonflable axisymétrique annulaire 330.

Enfin, l'appareil comporte aussi possiblement un laser, non représenté ici.

Par exemple, le laser émet un rayonnement qui pointe à une distance prédéterminée du bord utile 321 du mandrin 320.

Ainsi, en faisant tourner le mandrin 320, il est possible de vérifier un alignement d'un objet disposé autour du mandrin 320.

Dans l'exemple de la figure 3, les deux pièces 301, 302 à assembler sont montées sur un même mandrin 320, la pièce 301 étant montée à l'envers.

La première pièce 301 comporte une surface intérieure 312 et une surface extérieure 308, ainsi que, sur cette surface intérieure près de son bord 313, une bande 307 périphérique qui est destinée à être encollée.

La deuxième pièce 302 comporte une surface intérieure 311 et une surface extérieure 314, ainsi que, près d'un bord 315 sur la surface extérieure 314, une bande périphérique 310 qui est destinée à être encollée.

Les bandes périphériques 307 et 310 sont souvent biseautées mais la présente description pourrait tout aussi bien s'appliquer à des bandes d'épaisseur constante.

Comme indiqué ci-dessus, la première pièce 301 est positionnée sur le mandrin 320 à l'envers, c'est-à-dire pour que la bande 307, qui fait partie de la surface intérieure de cette pièce, soit orientée vers l'extérieur. Autrement dit, le procédé comporte une étape d'enfilage de la première pièce 301 autour du mandrin 320, avec une partie 309 de la surface extérieure 308 de la première pièce 301 orientée vers le mandrin 320, c'est-à-dire par exemple en vis-à-vis, voire en contact, de la surface 323 du mandrin 320, et la bande 307 de surface intérieure 312 est orientée vers l'extérieur.

La bande 307 périphérique est positionnée, au moins en partie et de préférence intégralement, au-dessus du dispositif gonflable axisymétrique annulaire 330, à quelques centimètres du bord utile 321 de sorte à pouvoir ultérieurement positionner la bande périphérique de la deuxième pièce 302. La bande 307 à retourner est en outre avantageusement positionnée au-delà de la ligne d'attache 333 du dispositif gonflable 330 au mandrin 320.

La deuxième pièce 302 est ensuite ici mise en place sur le même mandrin 320, avec sa bande 310 périphérique également orientée vers l'extérieur. Elle est enfilée, à l'endroit, autour de la première pièce 301, qui est à l'envers. Un tronçon 316 de la deuxième pièce 302 entoure donc aussi le mandrin 320. Ainsi, la surface intérieure 311 de la deuxième pièce 302 est en vis-à-vis, voire en contact sur au moins une partie, de la surface intérieure 312 de la première pièce 301. La bande 310 de surface extérieure 314 de la deuxième pièce 302 est de préférence positionnée au voisinage de la bande 307 de la première pièce 301, voire la bande 310 de la deuxième pièce 302 jouxte la bande 307 de la première pièce 301, mais la bande 310 de la deuxième pièce est de préférence positionnée juste en avant du bord d'attache 333 du dispositif gonflable 330. Ainsi la bande 307 de la première pièce 301 dépasse au moins en partie de la deuxième pièce 302.

Une fois les pièces 301, 302 mises en place sur le mandrin 320, le dispositif gonflable axisymétrique annulaire 330 est gonflé au moyen du système de gonflage 331.

La figure 3b permet d'illustrer le retournement de la bande 307 de la première pièce 301 sur la bande 310 de la deuxième pièce 302.

Une fois les pièces 301, 302 positionnées l'une par rapport à l'autre sur le mandrin 320, le dispositif gonflable axisymétrique annulaire 330 est gonflé progressivement.

Son gonflage entraine un soulèvement du bord 313 de la première pièce et un retournement d'une partie de la première pièce 301 qui est positionnée sur le dispositif gonflable 330.

Cela permet ainsi un retournement de la bande 307 de la première pièce 301, qui vient alors se rabattre sur la bande 310 de la deuxième pièce 302.

Ensuite, une étape de vulcanisation peut avoir lieu si nécessaire.

Comme le montre schématiquement la figure 3b, le dispositif gonflable axisymétrique annulaire 330 est configuré pour s'épandre au-delà du bord d'attache 333 une fois gonflé. C'est par exagération qu'il est représenté que le dispositif gonflable axisymétrique annulaire se déforme jusqu'à couvrir le bord 313 ; en pratique, il suffit que ce dispositif se déforme jusqu'à dépasser, dans sa zone recouverte par le bord 313, une orientation perpendiculaire à l'axe du mandrin.

Ceci est par exemple rendu possible par l'utilisation du matériau choisi pour le dispositif gonflable 330. Ainsi, dans une forme de réalisation, ce matériau a une épaisseur qui, du côté du bord libre du mandrin (vers la droite à la figure 3b) est inférieure à l'épaisseur du côté opposé (vers la gauche).

En variante, cet effet de retournement peut être obtenu en fixant le dispositif gonflable axisymétrique annulaire d'une manière décalée vers le bord utile, par rapport à sa portion centrale, en configuration dégonflée ; ainsi on comprend que, si le dispositif 330 est uniquement fixé au mandrin près de son bord droit, il aura tendance à se déplacer vers la droite au fur et à mesure de son gonflage.

Le dispositif gonflable axisymétrique annulaire, ici en forme de tore, avec donc une seule cavité gonflable, peut être remplacé par une succession de cavités gonflables s'étendant tout autour du mandrin.

L'appareil comporte enfin ici un système de commande de synchronisation et de contrôle 324 qui permet d'agir sur le système de gonflage 331 pour régler et contrôler le dégonflage et le gonflage du dispositif gonflable axisymétrique annulaire 330 et si nécessaire pour faire tourner le mandrin 320.

L'exemple de réalisation de la figure 4 diffère en ce que la deuxième pièce 302' est montée sur un mandrin différent de celui sur lequel est montée la première pièce 301'.

Pour cela, l'appareil comporte donc un deuxième mandrin 340' sur lequel est montée la deuxième pièce 302'. Le mandrin 320' sur lequel est montée la première pièce 301' est alors dit « premier mandrin ».

Les éléments analogues à ceux du mode de réalisation de la figure 3 portent les mêmes références numériques augmentées d'un signe « prime », voire « seconde ». Ils ne sont donc pas décrits à nouveau en détails ici.

Le deuxième mandrin 340' est semblable au premier mandrin 320'. Il comporte un bord utile 341', et est, ici, rotatif. En outre, il est, ici, creux. Il présente par exemple un axe longitudinal Y' et un diamètre D" sensiblement égal au diamètre D' du premier mandrin 320'.

Le deuxième mandrin 340' est disposé avec son axe longitudinal Y' aligné avec l'axe longitudinal X' du premier mandrin 320', et avec son bord utile 341' en face du bord utile 321' du premier mandrin 320'.

Si nécessaire l'appareil peut comporter un deuxième laser (non représenté) configuré pour contrôler le positionnement d'une pièce montée dessus.

L'appareil comporte enfin un mécanisme de rapprochement du premier mandrin et du deuxième mandrin, non représenté.

Le mécanisme de rapprochement comporte par exemple un rail sur lequel sont montés le premier mandrin 320' et le deuxième mandrin 340'.

Ou selon un autre exemple non représenté, le mécanisme de rapprochement comporte un vérin relié à au moins l'un du premier mandrin 320' ou du deuxième mandrin 340', par exemple attaché à un pion de fixation 317', 318' en arrière du mandrin 320', 340'.

Par exemple, l'un des deux mandrins est fixe alors que l'autre est mobile (comme schématisé ici), ou les deux sont mobiles.

Dans l'exemple de réalisation représenté ici, le premier mandrin 320' est mobile alors que le deuxième mandrin 340' est fixe.

Comme le montre la figure 4b, de même que précédemment, la première pièce 301' est montée à l'envers sur le premier mandrin 320' avec sa bande 307' sur le dispositif gonflable axisymétrique annulaire 330'.

Dans ce mode de réalisation, le dispositif gonflable axisymétrique annulaire 330' est près du bord utile 321', voire est contigu au bord utile 321' de sorte que la bande 307' est au plus près de la bande 310' de la deuxième pièce 302' lors de son retournement.

Pour que la bande 310' de la deuxième pièce 302' soit en vis-à-vis de la bande 307' de la première pièce 301' lors de son retournement, la deuxième pièce 302' est insérée en partie dans le deuxième mandrin 340' ; un tronçon 316' de la deuxième pièce 302' qui comporte au moins la bande 310' est retourné par-dessus le bord utile 341' du deuxième mandrin 340', et la bande 310' est encore retournée, formant ainsi un ourlet du tronçon 316', afin d'être orientée vers l'extérieur.

Ainsi, le bord 315' de la deuxième pièce 302' est dirigé vers la première pièce 301'.

Une fois la première pièce 301' positionnée sur le premier mandrin 320' et la deuxième pièce 302' positionnée sur le deuxième mandrin 340', le premier mandrin 320' et le deuxième mandrin 340' sont rapprochés l'un de l'autre. Par exemple, ils sont rapprochés jusqu'à venir en butée l'un contre l'autre.

Ensuite, de même que précédemment, le dispositif gonflable axisymétrique annulaire est gonflé et la bande 307' de la première pièce 301' est retournée sur la bande 310' de la deuxième pièce 302'.

Selon un autre mode de réalisation non représenté, le deuxième mandrin 340' pourrait également comporter un dispositif gonflable axisymétrique annulaire de sorte que la première pièce puisse être indifféremment montée sur l'un ou l'autre des mandrins, le mandrin sur lequel la première pièce est montée comportant alors le dispositif gonflable axisymétrique annulaire à gonfler pour réaliser le retournement de la bande.

L'appareil comporte en outre ici un système de commande de synchronisation et de contrôle 324' qui permet d'agir sur le système de gonflage 331' pour régler et contrôler le dégonflage et le gonflage du dispositif gonflable axisymétrique annulaire 330' et si nécessaire pour faire tourner et avancer (si celui-ci est mobile en translation) le premier mandrin 320'. Il comporte aussi un système de commande de synchronisation et de contrôle 324" optionnel qui permet de faire tourner le deuxième mandrin 340' (voire de le faire avancer si celui-ci était mobile par exemple, ou de gérer un dispositif gonflable axisymétrique annulaire si le deuxième mandrin en comportait un). Avantageusement le système de commande de synchronisation et de contrôle 324' du premier mandrin 320' et le système de commande de synchronisation et de contrôle 324" du deuxième mandrin 340' sont regroupés en un seul système de commande.

De manière générale, dans l'exemple de la figure 3 comme dans l'exemple de la figure 4, les bandes 307, 307' et 310, 310' sont encollées.

Le ou les lasers, le cas échéant, permettent de vérifier leur positionnement, par exemple une distance des bords 313, 313', 315, 315' des première et deuxième pièces 301, 301', 302, 302' par rapport au bord utile 321, 321', 341' des mandrins 320, 320', 340'. Par exemple pour vérifier que la bande 307, 307' de la première pièce 301, 301' est bien parallèle à la bande 310, 310' de la deuxième pièce 302, 302'. A cet effet, il est donc bien commode que le ou les mandrins soient rotatifs.

Eventuellement, des marques et/ou des butées peuvent aussi être présentes sur les mandrins pour faciliter les positionnements des pièces et des bandes destinées à être collées.

Enfin, dans l'exemple de la figure 4, la première pièce 301' correspond à une pièce supérieure telle qu'illustrée sur la figure 1, mais il pourrait bien entendu s'agir d'une pièce inférieure ou d'une pièce intermédiaire.

Bien sûr, la présente invention ne se limite ni à la description précédente ni aux figures annexées, mais s'étend à toute variante à la portée de l'homme du métier dans le cadre défini par les revendications.

## Revendications

1. Procédé d'assemblage d'une vessie formée d'au moins une première pièce (301, 301') et une deuxième pièce (302, 302'),
la première pièce (301, 301') comportant une surface intérieure (312, 312') et une surface extérieure (308, 308'), et une bande périphérique (307, 307') de surface intérieure (312, 312') près d'un bord (313, 313') et qui est destinée à être encollée, et
la deuxième pièce (302, 302') comportant une surface intérieure (311, 311') et une surface extérieure (314, 314'), et une bande périphérique (310, 310') de surface extérieure (314, 314') près d'un bord (315, 315') et qui est destinée à être encollée, le procédé comportant
- Une étape d'enfilage de la première pièce (301, 301') autour d'un mandrin cylindrique (320, 320') ayant un bord libre, avec une partie (309, 309') de la surface extérieure (308, 308') de la première pièce (301, 301') orientée vers le mandrin (320, 320') et la bande périphérique (307, 307') de surface intérieure (312, 312') orientée vers l'extérieur ;
- Une étape de mise en place de la deuxième pièce (302, 302') avec la bande (310, 310') de la deuxième pièce (302, 302') orientée vers l'extérieur et au voisinage de la bande (307, 307') de la première pièce (301, 301')
et étant **caractérisé en ce que** :
- l'étape d'enfilage de la première pièce comporte une sous-étape de positionnement de la bande (307, 307') de la première pièce (301, 301') au-dessus d'un dispositif gonflable axisymétrique annulaire (330, 330') positionné autour du mandrin (320, 320'),
et **en ce qu'**il comporte :
- Une étape de gonflage du dispositif gonflable axisymétrique annulaire (330, 330') qui retourne la bande (307, 307') de la première pièce (301, 301') sur la bande (310, 310') de la deuxième pièce (302, 302').

2. Procédé selon la revendication 1, dans lequel la première bande est positionnée au-dessus du dispositif gonflable axisymétrique annulaire dans une configuration dégonflée où ce dispositif est fixé à la surface du mandrin en une zone qui est, par rapport à une zone médiane de ce dispositif gonflable perpendiculairement à l'axe du mandrin, décalée vers le bord libre du mandrin.

3. Procédé selon la revendication 1 ou la revendication 2, **caractérisé en ce que** l'étape de mise en place de la deuxième pièce (302) comporte une étape d'enfilage de la deuxième pièce (302) sur la première pièce (301) autour du même mandrin (320), avec la bande (307) de la première pièce (301) qui dépasse du bord (315) de la deuxième pièce (302) près duquel se trouve la bande (310) de la deuxième pièce (302), de sorte que la surface intérieure (311) de la deuxième pièce (302) est en contact avec la surface intérieure (312) de la première pièce (301).

4. Procédé selon la revendication 1, **caractérisé en ce que** l'étape de mise en place de la deuxième pièce (302') comporte une étape d'enfilage de la deuxième pièce (302') sur un mandrin différent (340') du mandrin (320') sur lequel est enfilée la première pièce (301').

5. Procédé selon la revendication 3, **caractérisé en ce que** l'étape d'enfilage de la deuxième pièce (302') sur le mandrin différent (340') comporte :
- Une étape d'insertion de la deuxième pièce (302') dans le mandrin différent (340') ;
- Une étape de retournement d'un tronçon (316') de la deuxième pièce (302') comportant au moins la bande (310') par-dessus un bord utile (341') du mandrin (340') ; et
- Une étape de formation d'un ourlet avec la bande (310') de la deuxième pièce (302') grâce à quoi la bande (310') de la deuxième pièce (302') est orientée vers l'extérieur.

6. Procédé selon l'une quelconque des revendications 3 ou 4, **caractérisé en ce qu'**il comporte une étape de rapprochement du mandrin (320') sur lequel est enfilée la première pièce (301') et du mandrin (340') sur lequel est enfilée la deuxième pièce (302') avant l'étape de gonflage du dispositif gonflable (330').

7. Appareil d'assemblage d'une vessie formée d'au moins une première pièce (301, 301') avec une bande périphérique (307, 307') de surface intérieure (312, 312') près d'un bord (313, 313') qui est destinée à être encollée et d'une deuxième pièce (302, 302') avec une bande périphérique (310, 310') de surface extérieure (314, 314') près d'un bord (315, 315') qui est destinée à être encollée,
l'appareil comportant un mandrin cylindrique (320, 320'), une première zone de réception destinée à recevoir la bande périphérique de la première pièce, cette première zone étant ménagée près d'un bord libre du mandrin cylindrique et cet appareil comportant en outre un dispositif gonflable axisymétrique annulaire (330, 330') positionné et fixé en périphérie du mandrin (320, 320') en sorte de constituer la première zone de réception, et un système de gonflage (331, 331') du dispositif gonflable axisymétrique annulaire (330, 330'), et
l'appareil étant **caractérisé en ce qu'**il comporte une seconde zone de réception destinée à recevoir la bande périphérique de la seconde pièce à proximité de la première zone de réception, et **en ce que** le dispositif gonflable axisymétrique annulaire et le système de gonflage sont conçus en sorte de pouvoir retourner la bande périphérique de la première pièce sur la bande périphérique de la seconde pièce.

8. Appareil selon la revendication 7, **caractérisé en ce que** le dispositif gonflable axisymétrique annulaire (330, 330') est en forme de tore entourant une section droite du mandrin (320, 320').

9. Appareil selon l'une quelconque des revendications 7 ou 8, **caractérisé en ce que** le dispositif de gonflable axisymétrique annulaire est, dans sa configuration dégonflée, fixé à la surface du mandrin en une zone qui est, par rapport à une zone médiane de ce dispositif gonflable perpendiculairement à l'axe du mandrin, décalée vers le bord libre du mandrin.

10. Appareil selon l'une quelconque des revendications 7 ou 8, **caractérisé en ce que** le dispositif gonflable axisymétrique annulaire est conçu de manière à avoir un comportement anisotrope en déformation, se déformant, parallèlement à l'axe du mandrin, de manière plus importante vers le bord libre du mandrin qu'à l'opposé de celui-ci.

11. Appareil selon l'une quelconque des revendications 7 à 9, **caractérisé en ce que** le dispositif gonflable axisymétrique annulaire a une paroi présentant une variation d'épaisseur ou de rigidité favorisant au gonflage le décalage du dispositif gonflable axisymétrique annulaire vers le côté utile du mandrin.

12. Appareil selon l'une quelconque des revendications 7 à 11, **caractérisé en ce que** le dispositif gonflable axisymétrique annulaire comporte une ou plusieurs cavités.

13. Appareil selon l'une quelconque des revendications 7 à 12, **caractérisé en ce que** le mandrin (320, 320') est rotatif autour d'un axe longitudinal (X, X') du mandrin (320, 320').

14. Appareil selon l'une quelconque des revendications 7 à 13, **caractérisé en ce que** le mandrin (320') est un premier mandrin cylindrique et **en ce que** l'appareil comporte en outre un deuxième mandrin (340'), cylindrique, aligné par rapport au premier mandrin (320'), et **en ce que** l'appareil comporte un mécanisme de rapprochement du premier mandrin et du deuxième mandrin.

15. Appareil selon la revendication 14, **caractérisé en ce qu'**un diamètre (D") du deuxième mandrin (340') est égal à un diamètre (D') du premier mandrin (320').

16. Appareil selon l'une quelconque des revendications 14 ou 15, **caractérisé en ce que** le deuxième mandrin (340') est rotatif autour d'un axe longitudinal (Y') du deuxième mandrin (340').

17. Appareil selon l'une quelconque des revendications 7 à 16, **caractérisé en ce que** l'appareil comporte un laser de contrôle d'alignement d'une pièce sur un mandrin.

## Patentansprüche

1. Verfahren zum Zusammenfügen einer Blase, die aus zumindest einem ersten Teil (301, 301') und einem zweiten Teil (302, 302') gebildet ist, wobei das erste Teil (301, 301') eine Innenfläche (312, 312') und eine Au-ßenfläche (308, 308') aufweist, sowie ein umlaufendes Band (307, 307') mit der Innenfläche (312, 312') nahe einer Randkante (313, 313'), das dazu bestimmt ist, verklebt zu werden, und
wobei das zweite Teil (302, 302') eine Innenfläche (311, 311') und eine Au-ßenfläche (314, 314') aufweist, sowie ein umlaufendes Band (310, 310') mit der Außenfläche (314, 314') nahe einer Randkante (315, 315'), das dazu bestimmt ist, verklebt zu werden,
wobei das Verfahren umfasst:
- einen Schritt des Aufschiebens von dem ersten Teil (301, 301') um einen eine freie Randkante aufweisenden zylindrischen Dorn (320, 320'), wobei ein Abschnitt (309, 309') der Außenfläche (308, 308') des ersten Teils (301, 301') zum Dorn (320, 320') hin gerichtet ist und das umlaufende Band (307, 307') mit der Innenfläche (312, 312') nach außen gerichtet ist;
- einen Schritt des Einsetzens von dem zweiten Teil (302, 302'), wobei das Band (310, 310') des zweiten Teils (302, 302') nach außen gerichtet ist und benachbart zum Band (307, 307') des ersten Teils (301, 301') liegt, **dadurch gekennzeichnet, dass**
- der Schritt des Aufschiebens von dem ersten Teil einen Unterschritt des Positionierens von dem Band (307, 307') des ersten Teils (301, 301') oberhalb einer ringförmigen, achssymmetrischen, aufblasbaren Vorrichtung (330, 330'), die um den Dorn (320, 320') herum positioniert ist, umfasst, und dass es umfasst:
- einen Schritt des Aufblasens der ringförmigen, achssymmetrischen, aufblasbaren Vorrichtung (330, 330'), mit dem das Band (307, 307') des ersten Teils (301, 301') auf das Band (310, 310') des zweiten Teils (302, 302') umgestülpt wird.

2. Verfahren nach Anspruch 1, wobei das erste Band oberhalb der ringförmigen, achssymmetrischen, aufblasbaren Vorrichtung in einer abgeblasenen Stellung positioniert ist, wo diese Vorrichtung an der Oberfläche des Dorns in einem Bereich befestigt ist, der bezüglich eines mittigen Bereichs dieser aufblasbaren Vorrichtung senkrecht zur Achse des Dorns zur freien Randkante des Dorns hin versetzt ist.

3. Verfahren nach Anspruch 1 oder Anspruch 2, **dadurch gekennzeichnet, dass** der Schritt des Einsetzens von dem zweiten Teil (302) einen Schritt des Aufschiebens von dem zweiten Teil (302) auf das erste Teil (301) um den gleichen Dorn (320) herum umfasst, wobei das Band (307) des ersten Teils (301) von der Randkante (315) der zweiten Teils (302) vorsteht, in deren Nähe sich das Band (310) des zweiten Teils (302) befindet, so dass die Innenfläche (311) des zweiten Teils (302) mit der Innenfläche (312) des ersten Teils (301) in Kontakt steht.

4. Verfahren nach Anspruch 1, **dadurch gekennzeichnet, dass** der Schritt des Einsetzens von dem zweiten Teil (302') einen Schritt des Aufschiebens von dem zweiten Teil (302') auf einen anderen Dorn (340') als der Dorn (320') umfasst, auf dem das erste Teil (301') aufgeschoben wird.

5. Verfahren nach Anspruch 3, **dadurch gekennzeichnet, dass** der Schritt des Aufschiebens von dem zweiten Teil (302') auf den anderen Dorn (340') umfasst:
- einen Schritt des Einfügens von dem zweiten Teil (302') in den anderen Dorn (340'); und
- einen Schritt des Umstülpens von einem Abschnitt (316') des zweiten Teils (302'), der zumindest das Band (310') enthält, über eine Nutzrandkante (341') des Dorns (340'); und
- einen Schritt des Ausbildens von einem Umschlag mit dem Band (310') des zweiten Teils (302'), wodurch das Band (310') des zweiten Teils (302') nach außen gerichtet wird.

6. Verfahren nach einem der Ansprüche 3 oder 4, **dadurch gekennzeichnet, dass** es vor dem Schritt des Aufblasens der aufblasbaren Vorrichtung (330') einen Schritt des Annäherns von dem Dorn (320'), auf den das erste Teil (301') aufgeschoben wird, sowie von dem Dorn (340'), auf den das zweite Teil (302') aufgeschoben wird, umfasst.

7. Einrichtung zum Zusammenfügen einer Blase, die aus zumindest einem ersten Teil (301, 301') mit einem umlaufendem Band (307, 307') mit der Innenfläche (312, 312') nahe einer Randkante (313, 313') gebildet ist, das dazu bestimmt ist, verklebt zu werden, sowie aus einem zweiten Teil (302, 302') mit einem umlaufenden Band (310, 310') mit der Außenfläche (314, 314') nahe einer Randkante (315, 315'), das dazu bestimmt ist, verklebt zu werden,
wobei die Einrichtung einen zylindrischen Dorn (320, 320') und einen ersten Aufnahmebereich enthält, der dazu bestimmt ist, das umlaufende Band des ersten Teils aufzunehmen, wobei dieser erste Bereich nahe einer freien Randkante des zylindrischen Dorns ausgebildet ist und diese Einrichtung ferner eine ringförmige, achssymmetrische, aufblasbare Vorrichtung (330, 330') enthält, die am Umfang des Dorns (320, 320') so positioniert und daran befestigt ist, dass sie den ersten Aufnahmebereich bildet, sowie ein Aufblassystem (331, 331') zum Aufblasen der ringförmigen, achssymmetrischen, aufblasbaren Vorrichtung (330, 330'), und
wobei die Einrichtung **dadurch gekennzeichnet ist, dass** sie einen zweiten Aufnahmebereich enthält, der dazu bestimmt ist, das umlaufende Bande des zweiten Teils in der Nähe des ersten Aufnahmebereichs aufzunehmen, und dass
die ringförmige, achssymmetrische, aufblasbare Vorrichtung und das Aufblassystem dazu ausgelegt sind, das umlaufende Band des ersten Teils auf das umlaufende Band des zweiten Teils umstülpen zu können.

8. Einrichtung nach Anspruch 7, **dadurch gekennzeichnet, dass** die ringförmige, achssymmetrische, aufblasbare Vorrichtung (330, 330') in Form eines Torus vorliegt, der einen geraden Abschnitt des Dorns (320, 320') umgibt.

9. Einrichtung nach einem der Ansprüche 7 oder 8, **dadurch gekennzeichnet, dass** die ringförmige, achssymmetrische, aufblasbare Vorrichtung (330, 330') in ihrer abgeblasenen Stellung an der Oberfläche des Dorns in einem Bereich befestigt ist, der bezüglich eines mittigen Bereichs dieser aufblasbaren Vorrichtung senkrecht zur Achse des Dorns zur freien Randkante des Dorns hin versetzt ist.

10. Einrichtung nach einem der Ansprüche 7 oder 8, **dadurch gekennzeichnet, dass** die ringförmige, achssymmetrische, aufblasbare Vorrichtung so ausgelegt ist, dass sie ein bei Verformung anisotropes Verhalten hat und sich parallel zur Achse des Dorns zur freien Randkante des Dorns hin stärker verformt als entgegengesetzt zu dieser.

11. Einrichtung nach einem der Ansprüche 7 bis 9, **dadurch gekennzeichnet, dass** die ringförmige, achssymmetrische, aufblasbare Vorrichtung eine Wand hat, die eine Dicken- bzw. Steifigkeitsänderung aufweist, welche beim Aufblasen das Versetzen der ringförmigen, achssymmetrischen, aufblasbaren Vorrichtung zur Nutzseite des Dorns hin begünstigt.

12. Einrichtung nach einem der Ansprüche 7 bis 11, **dadurch gekennzeichnet, dass** die ringförmige, achssymmetrische, aufblasbare Vorrichtung eine oder mehrere Vertiefungen aufweist.

13. Einrichtung nach einem der Ansprüche 7 bis 12, **dadurch gekennzeichnet, dass** der Dorn (320, 320') um eine Längsachse (X, X') des Dorns (320, 320') drehbar ist.

14. Einrichtung nach einem der Ansprüche 7 bis 13, **dadurch gekennzeichnet, dass** der Dorn (320') ein erster zylindrischer Dorn ist, und dass die Einrichtung ferner einen zweiten zylindrischen Dorn (340') enthält, der bezüglich des ersten Dorns (320') fluchtend ausgerichtet ist, und dass die Einrichtung einen Mechanismus zum Annähern des ersten Dorns und des zweiten Dorns enthält.

15. Einrichtung nach Anspruch 14, **dadurch gekennzeichnet, dass** ein Durchmesser (D") des zweiten Dorns (340') gleich einem Durchmesser (D') des ersten Dorns (320') ist.

16. Einrichtung nach einem der Ansprüche 14 oder 15, **dadurch gekennzeichnet, dass** der zweite Dorn (340') um eine Längsachse (Y') des zweiten Dorns (340') drehbar ist.

17. Einrichtung nach einem der Ansprüche 7 bis 16, **dadurch gekennzeichnet, dass** die Einrichtung einen Laser zum Steuern der fluchtenden Ausrichtung eines Teils an einem Dorn enthält.

## Claims

1. Method for assembling a bladder that consists of at least a first part (301, 301') and a second part (302, 302'),
the first part (301, 301') comprising an interior surface (312, 312'), an exterior surface (308, 308') and a peripheral strip (307, 307') on the interior surface (312, 312'), which strip is close to an edge (313, 313') and intended for being coated with adhesive, and
the second part (302, 302') comprising an interior surface (311, 311'), an exterior surface (314, 314') and a peripheral strip (310, 310') on the exterior surface (314, 314'), which strip is close to an edge (315, 315') and intended for being coated with adhesive,
the method comprising
- a step of fitting the first part (301, 301') around a cylindrical mandrel (320, 320') that has a free edge, with a portion (309, 309') of the exterior surface (308, 308') of the first part (301, 301') facing towards the mandrel (320, 320') and the peripheral strip (307, 307') of the interior surface (312, 312') facing outwards;
- a step of positioning the second part (302, 302') with the strip (310, 310') of the second part (302, 302') facing outwards and adjacent to the strip (307, 307') of the first part (301, 301');
and being **characterised in that**
- the step of fitting the first part comprises a sub-step of positioning the strip (307, 307') of the first part (301, 301') above an annular axisymmetric inflatable device (330, 330') that is located around the mandrel (320, 320'),
and **in that** said method comprises
- a step of inflating the annular axisymmetric inflatable device (330, 330') which causes the strip (307, 307') of the first part (301, 301') to fold over the strip (310, 310') of the second part (302, 302').

2. Method according to claim 1, wherein the first strip is located above the annular axisymmetric inflatable device when said device is in a deflated state in which it is attached to the surface of the mandrel in a region which is offset towards the free edge of the mandrel with respect to a median region of said device that can be inflated perpendicularly to the axis of the mandrel.

3. Method according to either claim 1 or claim 2, **characterised in that** the step of positioning the second part (302) comprises a step of fitting the second part (302) onto the first part (301) around the same mandrel (320), with the strip (307) of the first part (301) projecting beyond the edge (315) of the second part (302) that is close to where the strip (310) of the second part (302) is located, such that the interior surface (311) of the second part (302) is in contact with the interior surface (312) of the first part (301).

4. Method according to claim 1, **characterised in that** the step of positioning the second part (302') comprises a step of fitting the second part (302') onto a mandrel (340') that is different from the mandrel (320') onto which the first part (301') is fitted.

5. Method according to claim 3, **characterised in that** the step of fitting the second part (302') onto the different mandrel (340') comprises:
- a step of inserting the second part (302') into the different mandrel (340');
- a step of folding a segment (316') of the second part (302') comprising at least the strip (310') over a useful edge (341') of the mandrel (340'); and
- a step of forming a hem using the strip (310') of the second part (302'), as a result of which the strip (310') of the second part (302') faces outwards.

6. Method according to either claim 3 or claim 4, **characterised in that** it comprises a step of bringing the mandrel (320') onto which the first part (301') is fitted and the mandrel (340') onto which the second part (302') is fitted together before the step of inflating the inflatable device (330').

7. Apparatus for assembling a bladder that consists of at least a first part (301, 301') which comprises a peripheral strip (307, 307') on the interior surface (312, 312'), which strip is close to an edge (313, 313') and intended for being coated with adhesive, and a second part (302, 302') which comprises a peripheral strip (310, 310') on the exterior surface (314, 314'), which strip is close to an edge (315, 315') and intended for being coated with adhesive,
the apparatus comprising a cylindrical mandrel (320, 320') and a first receiving region intended for receiving the peripheral strip of the first part, said first region being arranged close to a free edge of the cylindrical mandrel, and said apparatus further comprising an annular axisymmetric inflatable device (330, 330') located on and attached to the periphery of the mandrel (320, 320') so as to constitute the first receiving region, and a system (331, 331') for inflating the annular axisymmetric inflatable device (330, 330'), and
the apparatus being **characterised in that** it comprises a second receiving region intended for receiving the peripheral strip of the second part close to the first receiving region, and **in that** the annular axisymmetric inflatable device and the inflation system are designed so as to be able to fold the peripheral strip of the first part over the peripheral strip of the second part.

8. Apparatus according to claim 7, **characterised in that** the annular axisymmetric inflatable device (330, 330') is in the form of a torus that surrounds a straight portion of the mandrel (320, 320').

9. Apparatus according to either claim 7 or claim 8, **characterised in that**, when deflated, the annular axisymmetric inflatable device is attached to the surface of the mandrel in a region which is offset towards the free edge of the mandrel with respect to a median region of said device that can be inflated perpendicularly to the axis of the mandrel.

10. Apparatus according to either claim 7 or claim 8, **characterised in that** the annular axisymmetric inflatable device is designed so as to have anisotropic deformation behaviour, deforming, in parallel with the axis of the mandrel, to a greater extent towards the free edge of the mandrel than in the opposite direction.

11. Apparatus according to any of claims 7 to 9, **characterised in that** the annular axisymmetric inflatable device comprises a wall having a variation in thickness or rigidity that promotes, for the inflation, the offset of the annular axisymmetric inflatable device towards the useful side of the mandrel.

12. Apparatus according to any of claims 7 to 11, **characterised in that** the annular axisymmetric inflatable device comprises one or more recesses.

13. Apparatus according to any of claims 7 to 12, **characterised in that** the mandrel (320, 320') can be rotated about a longitudinal axis (X, X') of the mandrel (320, 320').

14. Apparatus according to any of claims 7 to 13, **characterised in that** the mandrel (320') is a first cylindrical mandrel, and **in that** the apparatus further comprises a second cylindrical mandrel (340') that is aligned with respect to the first mandrel (320'), and **in that** the apparatus comprises a mechanism for bringing the first mandrel and the second mandrel together.

15. Apparatus according to claim 14, **characterised in that** a diameter (D") of the second mandrel (340') is equal to a diameter (D') of the first mandrel (320').

16. Apparatus according to either claim 14 or claim 15, **characterised in that** the second mandrel (340') can be rotated about a longitudinal axis (Y') of the second mandrel (340').

17. Apparatus according to any of claims 7 to 16, **characterised in that** the apparatus comprises a laser for controlling the alignment of a part on a mandrel.
